# EUROPEAN PATENT APPLICATION

(11) **EP 1 783 363 A1**
(43) Date of publication of application: **09.05.2007**
(21) Application number: 06380085.8
(22) Date of filing: 17.04.2006
(51) Int. Cl.: F03D 9/00, F03D 11/02, F03D 1/06

(54) **Integrated wind power generator**

(30) Priority: 07.11.2005 AR 0504662
(71) Applicant: Industrias Metalurgicas Pescarmona S.A.I.C. Y F. IMPSA, Pcia. de Mendoza (AR)
(72) Inventor: Mañanes, Juan, Mendoza (AR); Pescarmona, Enrique, Mendoza (AR)
(74) Representative: Polo Flores, Luis Miguel

(57) **Abstract**

INTEGRATED WIND POWER GENERATOR. It is a device that integrates the functions of a wind turbine and a generator. In the main part of the induced structural component (4) are located the induction circuits, the core and the coil (5), and in the motor-inducer component (6), the blades supports (10) and the induction poles (7) are placed. When wind circulation occurs, the energy acting on the blades causes the motor-inducer component (6) to rotate around the induced structural component (3) generating a rotating magnetic field inducing an EMF in the induction circuits. According to what it is herein described, electricity is generated in the induction circuits (5) through only one device, functionally inseparable, in which both motor and generator functions are integrated.

## Description

### BACKGRUND

This invention consists of an integrated wind power generator that in only one device integrates the functions of a turbine and a generator.

Machines that convert wind kinetic energy into electrical energy are called "Wind Generators" or "Aero-generators". This type of machine is subdivided into two groups: low-power Aero-generators and high-power Aero-generators or Power Aero-generators. The former are low performance units whose power ranges from some hundreds of w to some tens of Kw. In general, they are light, low-complexity machines, used to feed small consumption units located far from the grid. The latter are machines with enough power to connect to the grids that feed important consumption centers. The power of these machines ranges from some hundreds of Kw to several Mw, and their technological complexity is far different from the former.

In the energy conversion chain of any Power Generator two main stages may be distinguished, namely:
a) In the first stage, a device usually called "turbine" converts wind kinetic energy into mechanical energy.
b) In the second stage, usually called "generator", mechanical energy (driven by the "turbine") is converted into electrical energy.

Both stages are physically connected by means of a "shaft" that transmits torque from the turbine to the generator, either directly or, if necessary, through a gearbox to increase rotation speed.

According to the type of generator used, there are two main design concepts:
1. Turbines with high-speed generators: they are generally asynchronous, high-speed, small-sized, with a limited number of induction poles connected to the turbine by means of a multistage speed increaser. This is a complex and expensive component that reduces the general performance of the equipment and significantly increases the machine outage for maintenance.
2. Turbines with slow-speed, multi-pole generators: they are generally synchronous machines, connected directly to the turbine and reaching a minimum generation frequency with numerous induction poles. These machines do not need a speed increaser, but are bigger and heavier than the ones belonging to the other group.

There are a third group using generators, which combines a one-stage speed increaser and a hybrid generator, which allows for the combination of physical rotation movement and magnetic field rotation induced by excited poles.

Any of the arrangements show a clear difference between both stages, turbine and generator, and some kind of structure or shaft that directly or indirectly transmits torque between them.

This invention consists of an integrated mechanism that in only one device integrates the turbine and the generator. This concept reduces many of the moving components of the equipment, since it does not require the use of a speed increaser or of individual rotating components.

Technologies and innovations applied to the design of this equipment also allow size reduction in contrast to the traditional multi-pole turbine-generator assemblies, due to the special design in the arrangement of generator active components and, in some arrangements, of the use of permanent magnets, also eliminating the rotating devices of energy transmission for inductor excitation. Consequently, this device allows minimizing important disadvantages caused by multi-pole generators with direct connection, such as size and weight, and at the same time, offers its main advantage represented by the absence of a speed increaser.

According to the arrangement chosen, the permanent magnets may be replaced by winding poles that allow the combination of physical pole rotation and magnetic field rotation induced by the excited poles.

As mentioned before, as auxiliary devices that increase speed are avoided, the device requires less maintenance work (as a reference, it is relevant to point out that this device rotates fewer times in twenty years of operation than a high-speed generator does in three months). Likewise, the particular design of the different components' arrangement decreases the loads in the tower structure, which reduces efforts and prolongs main roller bearing lifetime and tower active components.

Finally, this invention consists of a Power Aero-generator with significant advantages regarding efficiency, availability, reliability, operating costs and maintenance.

### DESCRIPTION

In general terms, this invention consists of an integrated wind power generator that integrates the functions of a wind turbine and a generator in only one device, functionally inseparable.

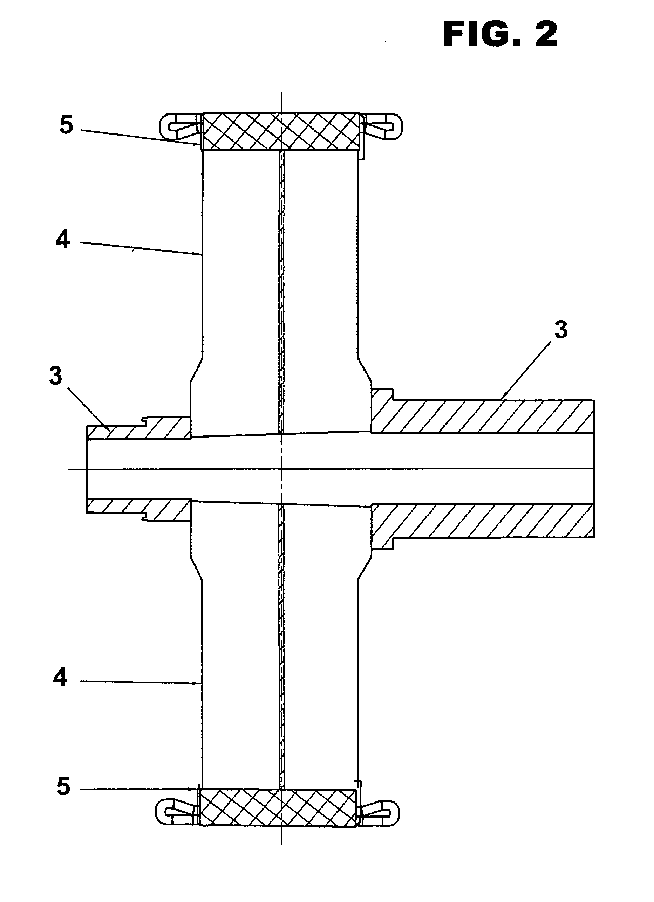

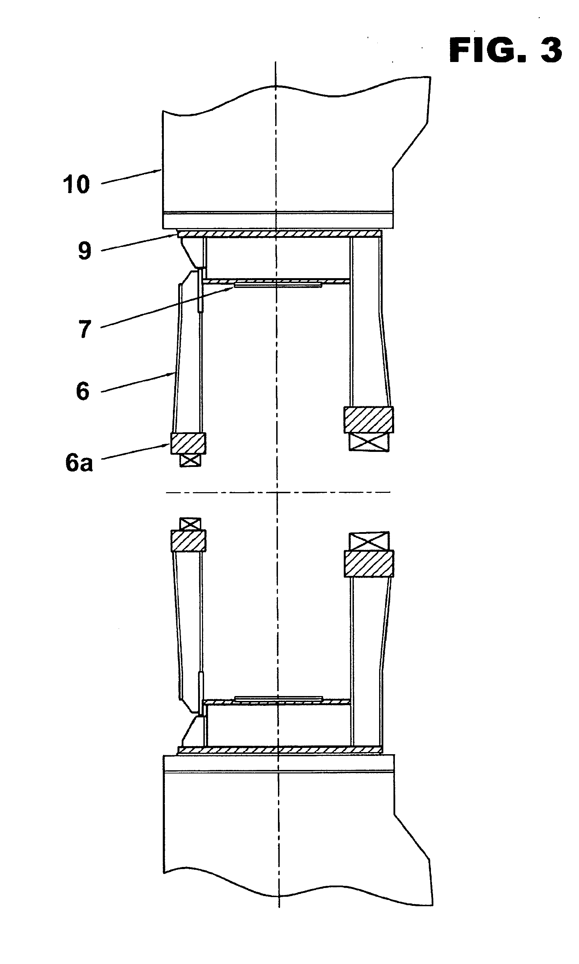

This device consists of two main components:
1. The motor-inducer component (Fig. 3)
2. The induced structural component (Fig. 2)

The motor-inducer component (6) is formed by:
a) The structural components that convert the force driven by the blades (10) into torque.
b) The induction poles that generate the magnetic field (07)
c) The roller bearings supporting assembly rotation (6a)

The induced structural component (Fig. 2) is formed by:
a) The structural components that support the stator core and induced winding (04).
b) The stator core (05) and induced winding.
c) The structural components on which the motor-inducer component rotates (03).

The motor-inducer component (6) is composed of a circular band joined by two lateral plates with roller bearings at the center, at each extreme of the induced structural component (4).

On the external surface of the motor-inducer component band (6), the flanges (09) to hold the blades (10) are located.

On the inner surface of the motor-inducer component band (6), the induction poles (07) are placed facing the induced (05) located on the external diameter of the induced structural component (04).

The induced structural component (3) is formed by a structure that supports the induction circuits and all the vertical and axial loads transferred by the motor-inducer component, transferring them to the nacelle structure.

According to the arrangement described above, the motor-inducer component (6) has a horizontal rotating shaft in order to surround the induced structural component in its rotating movement.

### Equipment performance:

The function of the tower (1) is to place the equipment at such a height as to allow the use of the best wind conditions.

The nacelle is located in the upper end of the tower, connected by means of a mechanism that allows its proper orientation, and it consists of a structure (2) designed to support the Integrated Wind Power Generator, the rest of the ancillary equipment necessary for its operation, and a shield to protect such equipment from outdoor exposure.

Once wind conditions are detected, the nacelle (2) is oriented to optimize wind use (with the wind vector perpendicular to the surface defined by the blade sweep). When wind circulates around the blade (10), a lift force effect occurs due to the difference in pressure between intrados and extrados caused by the characteristics of its profile. This pressure difference is transformed into force distributed throughout the blade surface (10), and this force applied to the flange of the motor-inducer component (6) generates torque acting on the rotor blades.

The rotating movement of the motor-inducer component (6) causes the magnetic field generated by the induction poles (7) to induce an EMF [electromotive force] in the induction circuits (5) of the induced structural component (3). This EMF generates electric current, which is driven to its later distribution in the ancillary systems and later availability to the grid.

There is no doubt that the natural evolution in this invention design introduces some changes regarding certain construction and shape details, which do not represent straying away from the fundamental principles that are clearly stated in the claims that follow:

### DRAWINGS

Further aspects of the invention object will become apparent from the several drawings describing it in one of the preferred ways of performance, and given by way of example only, excluding any limitation:

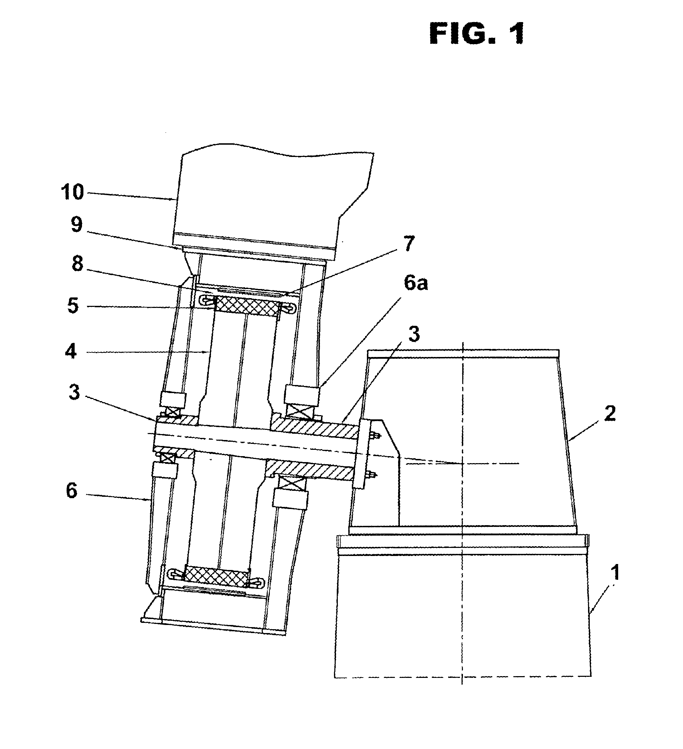

Figure 1. Machine cross section, in which the arrangement of the different components of this aero-generator, the motor-inducer component, and the structural-induced component may be clearly seen.
Figure 2. Induced structural component cross section, in which the arrangement of the induced and structure arrangement may be seen.
Figure 3. Motor-inducer component cross section showing the roller bearings allowing its rotation, the inner part where induction poles are located, and the external part where the blades to use the kinetic energy in the moving air are placed.

In these figures, the same reference numbers and/or letters indicate the same or corresponding parts.

List of main references
(1) Structure or assembly tower.
(2) Nacelle structural support.
(3) Induced structural component structure.
(4) Induced structural component body.
(5) Induced, core and coil.
(6) Motor-inducer component.
(6a) Main roller bearings [rolling means].
(7) Inducers.
(8) Air gap.
(9) Blade support.
(10) Blades.

## Claims

1. INTEGRATED WIND POWER GENERATOR; which is intended to use wind energy by means of wind action on a device; **characterized by** the functions of a turbine and a generator integrated in only one device.

2. INTEGRATED WIND POWER GENERATOR; according to claim 1; **characterized by** integrating the functions of a turbine and a generator in only one device, functionally inseparable.

3. INTEGRATED POWER WIND GENERATOR; according to claim 1; **characterized by** motor and induction functions integrated in only one component which rotates around another individual component which integrates the structural functions and those of an induced circuit.

4. INTEGRATED WIND POWER GENERATOR; according to claim 1; **characterized by** including, at least one motor-inducer component which has a certain type and number of blades outside and a certain type and number of magnetic inducers inside.

5. INTEGRATED WIND POWER GENERATOR; according to claim 1; **characterized by** having no shaft, considering this as the torque transmission element between the motor or turbine component and the generator.

6. INTEGRATED WIND POWER GENERATOR; according to claim 1; **characterized by** the motor-inducer component with the structural and induced components inside.

7. INTEGRATED WIND POWER GENERATOR; according to claim 1; **characterized by** the motor-inducer component, formed by the blades and the inducers, connected to the structure of the induced structural component by means of roller bearings.

8. INTEGRATED WIND POWER GENERATOR; according to claim 6; **characterized by** the motor-inducer component assembled so that rotating movement is allowed.

9. INTEGRATED WIND POWER GENERATOR; according to claim 1; **characterized by** a tall structure which projects a static structural component supporting an induction circuit and a motor-inducer component moved by wind and containing magnetic inducers.

10. INTEGRATED WIND POWER GENERATOR; according to claim 1; **characterized by** including at least one motor-inducer component and at least one induced structural component, assembled on the same structural support.

11. INTEGRATED WIND POWER GENERATOR; according to claim 1; **characterized by** the motor-inducer component with a vertical rotation level due to the horizontal arrangement of the induced structural component structure on which it is assembled.
